# EUROPEAN PATENT APPLICATION

(11) **EP 4 167 614 A1**
(43) Date of publication of application: **19.04.2023**
(21) Application number: 22199956.8
(22) Date of filing: 06.10.2022
(51) Int. Cl.: H04W 12/00, H04W 12/084, H04W 12/06, H04W 88/04, H04W 48/10, H04W 48/08, H04W 76/15, H04W 76/14

(54) **METHOD AND APPARATUS FOR COMMUNICATION SYSTEM WITH GATEWAY SERVICE**

(30) Priority: 12.10.2021 US 202163254779 P
(71) Applicant: Nokia Technologies Oy, 02610 Espoo (FI)
(72) Inventor: CHANDRAMOULI, Devaki, Plano (US); NATARAJAN, Rajesh Babu, Bangalore (IN); COVELL, Betsy, Chicago (US); WALIA, Deepmala, Chandigarh (IN)
(74) Representative: Nokia EPO representatives

(57) **Abstract**

A technique comprising: broadcasting, from a user equipment device having user equipment functionality in a mobile communication system, a message announcing to receiving devices a gateway service for transfer of data to and/or from a radio access network of the mobile communication system via the user equipment device.

## Description

### TECHNICAL FIELD

Various example embodiments described herein generally relate to apparatus, a method, and a computer program, and more particularly to apparatus, methods and computer programs for a communication system providing a gateway service.

### BACKGROUND

In the context of the operation of a mobile communication system, the situation may arise in which a user equipment device may provide a gateway service for transfer of data to and/or from a radio access network of the mobile communication system via the user equipment device. However, an improved mechanism for providing a gateway service with respect to a communication system is desired.

### SUMMARY

A method comprising: broadcasting, from a user equipment device having user equipment functionality in a mobile communication system, a message announcing to receiving devices a gateway service for transfer of data to and/or from a radio access network of the mobile communication system via the user equipment device.

The method may further comprise: detecting transmission of one or more gateway service requests to the user equipment device from one or more gateway service requesting devices; and transmitting a registration request message for an access management function of the mobile communication system; and the registration request message may comprise a request to register the user equipment device as a gateway service provider between the radio access network and the one or more gateway service requesting devices.

The registration request message may indicate one or more identifiers by which the access management function is able to check authorisation of the one or more gateway service requesting devices to receive the gateway service and/or check authorisation of the user equipment device to provide the gateway service.

The registration request message may carry information by which the access management function is able to check that one or more conditions for the gateway service are met.

The method may further comprise: receiving a registration accept message from the access management function; and providing the gateway service to one or more of the gateway service requesting devices; and the registration accept message may indicate one or more of: one or more gateway service requesting devices for which the user equipment device is authorised to provide the gateway service; and/or a length of time for which the user equipment device is authorised to provide the gateway service; and/or one or more applications for which the user equipment device is authorised to provide the gateway service.

The method may further comprise sending a further registration request message for the access management function indicating that the user equipment device is no longer providing the gateway service.

The method may further comprise transmitting, from the user equipment device to another device, a request for the another device to provide the user equipment device with gateway service for transfer of data to and/or from a radio access network of the mobile communication system.

A method comprising: detecting, from a transmission by a user equipment device having user equipment functionality in a mobile communication system, an announcement by the user equipment device of a gateway service for transfer of data to and/or from a radio access network of the mobile communication system via the user equipment device.

The method may further comprise transmitting, for the user equipment device, a request to receive the gateway service from the user equipment device, and the request may indicate an identifier by which an access management function of the mobile communication system can check for authorisation to receive the gateway service.

A method, comprising: receiving a registration request message from a user equipment device; wherein the registration request message comprises a request to register the user equipment device as a gateway service provider of a gateway service comprising transfer of data between the radio access network and one or more gateway service requesting devices.

The registration request message may indicate one or more identifiers for the one or more gateway service requesting devices; and the method may further comprise using the identifiers to check for authorisation of the one or more gateway service requesting devices to receive the gateway service.

The method may further comprise receiving, from a data management entity, subscription information about a subscription associated with a group of devices including the user equipment device; and determining, based on the received subscription information, whether to accept or reject the registration request based at least on an indication from the data management entity of a maximum number of group devices allowed to receive the gateway service from the user equipment device.

The method may further comprise determining to accept the registration request; and sending a registration accept message for the user equipment device; and the registration accept message may indicate one or more of: one or more gateway service requesting devices for which the user equipment device is authorised to provide the gateway service; and/or a length of time for which the user equipment device is authorised to provide the gateway service; and/or one or more applications for which the user equipment device is authorised to provide the gateway service.

The method may further comprise determining to accept the registration request for less than all the gateway service requesting devices indicated in the registration request message; and sending a registration accept message for the user equipment device; and the registration request message may indicate the one or more gateway service requesting devices for which the registration request is accepted, and may indicate that the registration request is rejected for other gateway service requesting devices for reason of a limit on the total number of devices allowed to receive the gateway service from the user equipment device.

The method may further comprise: determining to reject the registration request, based on an indication from the data management entity of a maximum number of group devices allowed to receive the gateway service from the user equipment device, and/or information from the data management entity about a subscription policy for the group of devices: and sending a registration reject message for the user equipment device; and the registration reject message may indicate a cause of determining to reject the registration request.

The method may further comprise: determining, from the registration request message, that one of the gateway service requesting devices indicated in the registration request message was previously providing a gateway service; and sending a message for an access management function for the device previously providing the gateway service; and the message may indicate a change in gateway for the gateway service.

A method comprising: receiving a registration request message from a first user equipment device; wherein the registration request message indicates that the first user equipment device has ceased to provide a gateway service comprising transfer of data between the radio access network and one or more gateway service requesting devices via the first user equipment device; sending a message for a data management entity, wherein the message indicates to the data management entity that the first user equipment device has ceased to provide the gateway service, and indicates a second user equipment device via which the user equipment is now receiving gateway service; and sending a message for an access management function for the second user equipment device, wherein the message indicates context information for the first user equipment device.

A method comprising: in response to a request from an access management function of a mobile communication system, sending a message for the access management device comprising subscription information about a subscription to the mobile communication system; wherein the subscription information indicates one or more allowed parameters for a gateway service comprising transfer of data between a radio access network of the mobile communication system and one or more gateway service receiving devices via a user equipment device.

The subscription information may relate to a subscription shared by a group of devices at least including one or more user equipment devices capable of providing the gateway service.

The subscription information may indicate one or more of the following: maximum number of devices of the group allowed to receive the gateway service from a user equipment device of the group; which one or more user equipment devices of the group are allowed to provide the gateway service; and maximum number of devices of the group allowed to provide the gateway service at the same time.

A method comprising: subscribing to an event notification service comprising receiving one or more event notifications from an access management function of a mobile communication system about events comprising changes in a gateway service comprising transfer of data to and/or from a radio access network of the mobile communication system and one or more gateway service receiving devices via a user equipment device; and based on an event notification from the access management function, initiating a change in a traffic routing configuration for the gateway service.

Apparatus comprising: at least one processor; and at least one memory including computer program code, the at least one memory and computer program code configured to, with the at least one processor, cause the apparatus to perform: broadcasting a message announcing to receiving devices a gateway service for transfer of data to and/or from a radio access network of a mobile communication system via the apparatus.

The at least one memory and computer program code may be configured to, with the at least one processor, cause the apparatus to: detect transmission of one or more gateway service requests from one or more gateway service requesting devices; and transmit a registration request message for an access management function of the mobile communication system, and the registration request message may comprise a request to register the apparatus as a gateway service provider between the radio access network and the one or more gateway service requesting devices.

The registration request message may indicate one or more identifiers by which the access management function is able to check authorisation of the one or more gateway service requesting devices to receive the gateway service and/or check authorisation of the apparatus to provide the gateway service.

The registration request message may carry information by which the access management function is able to check that one or more conditions for the gateway service are met.

The at least one memory and computer program code may be configured to, with the at least one processor, cause the apparatus to: receive a registration accept message from the access management function; and provide the gateway service to one or more of the gateway service requesting devices; and the registration accept message may indicate one or more of: one or more gateway service requesting devices for which the apparatus is authorised to provide the gateway service; and/or a length of time for which the apparatus is authorised to provide the gateway service; and/or one or more applications for which the apparatus is authorised to provide the gateway service.

The at least one memory and computer program code may be configured to, with the at least one processor, cause the apparatus to: send a further registration request message for the access management function indicating that the apparatus is no longer providing the gateway service.

The at least one memory and computer program code may be configured to, with the at least one processor, cause the apparatus to: transmit, to another device, a request for the another device to provide the apparatus with gateway service for transfer of data to and/or from a radio access network of the mobile communication system.

Apparatus comprising: at least one processor; and at least one memory including computer program code, the at least one memory and computer program code configured to, with the at least one processor, cause the apparatus to perform: detecting, from a transmission by a user equipment device having user equipment functionality in a mobile communication system, an announcement by the user equipment device of a gateway service for transfer of data to and/or from a radio access network of the mobile communication system via the user equipment device.

The at least one memory and computer program code may be configured to, with the at least one processor, cause the apparatus to: transmit, for the user equipment device, a request to receive the gateway service from the user equipment device, and the request may indicate an identifier by which an access management function of the mobile communication system can check for authorisation to receive the gateway service.

Apparatus comprising: at least one processor; and at least one memory including computer program code, the at least one memory and computer program code configured to, with the at least one processor, cause the apparatus to perform: receiving a registration request message from a user equipment device; wherein the registration request message comprises a request to register the user equipment device as a gateway service provider of a gateway service comprising transfer of data between the radio access network and one or more gateway service requesting devices.

The registration request message may indicate one or more identifiers for the one or more gateway service requesting devices; and the at least one memory and computer program code may be configured to, with the at least one processor, cause the apparatus to: use the identifiers to check for authorisation of the one or more gateway service requesting devices to receive the gateway service.

The at least one memory and computer program code may be configured to, with the at least one processor, cause the apparatus to: receive from a data management entity, subscription information about a subscription associated with a group of devices including the user equipment device; and determine, based on the received subscription information, whether to accept or reject the registration request based at least on an indication from the data management entity of a maximum number of group devices allowed to receive the gateway service from the user equipment device.

The at least one memory and computer program code may be configured to, with the at least one processor, cause the apparatus to: determine to accept the registration request; and send a registration accept message for the user equipment device; and the registration accept message may indicate one or more of: one or more gateway service requesting devices for which the user equipment device is authorised to provide the gateway service; and/or a length of time for which the user equipment device is authorised to provide the gateway service; and/or one or more applications for which the user equipment device is authorised to provide the gateway service.

The at least one memory and computer program code may be configured to, with the at least one processor, cause the apparatus to: determine to accept the registration request for less than all the gateway service requesting devices indicated in the registration request message; and send a registration accept message for the user equipment device; and the registration request message may indicate the one or more gateway service requesting devices for which the registration request is accepted, and indicate that the registration request is rejected for other gateway service requesting devices for reason of a limit on the total number of devices allowed to receive the gateway service from the user equipment device.

The at least one memory and computer program code may be configured to, with the at least one processor, cause the apparatus to: determine to reject the registration request, based on an indication from the data management entity of a maximum number of group devices allowed to receive the gateway service from the user equipment device, and/or information from the data management entity about a subscription policy for the group of devices: and send a registration reject message for the user equipment device; and the registration reject message may indicate a cause of determining to reject the registration request.

The at least one memory and computer program code may be configured to, with the at least one processor, cause the apparatus to: determine, from the registration request message, that one of the gateway service requesting devices indicated in the registration request message was previously providing a gateway service; and send a message for an access management function for the device previously providing the gateway service; and the message may indicate a change in gateway for the gateway service.

Apparatus comprising: at least one processor; and at least one memory including computer program code, the at least one memory and computer program code configured to, with the at least one processor, cause the apparatus to perform: receiving a registration request message from a first user equipment device; wherein the registration request message indicates that the first user equipment device has ceased to provide a gateway service comprising transfer of data between the radio access network and one or more gateway service requesting devices via the first user equipment device; sending a message for a data management entity, wherein the message indicates to the data management entity that the first user equipment device has ceased to provide the gateway service, and indicates a second user equipment device via which the user equipment is now receiving gateway service; and sending a message for an access management function for the second user equipment device, wherein the message indicates context information for the first user equipment device.

Apparatus comprising: at least one processor; and at least one memory including computer program code, the at least one memory and computer program code configured to, with the at least one processor, cause the apparatus to perform: in response to a request from an access management function of a mobile communication system, sending a message for the access management device comprising subscription information about a subscription to the mobile communication system; wherein the subscription information indicates one or more allowed parameters for a gateway service comprising transfer of data between a radio access network of the mobile communication system and one or more gateway service receiving devices via a user equipment device.

The subscription information may relate to a subscription shared by a group of devices at least including one or more user equipment devices capable of providing the gateway service.

The subscription information may indicate one or more of the following: maximum number of devices of the group allowed to receive the gateway service from a user equipment device of the group; which one or more user equipment devices of the group are allowed to provide the gateway service; and maximum number of devices of the group allowed to provide the gateway service at the same time.

Apparatus comprising: at least one processor; and at least one memory including computer program code, the at least one memory and computer program code configured to, with the at least one processor, cause the apparatus to perform: subscribing to an event notification service comprising receiving one or more event notifications from an access management function of a mobile communication system about events comprising changes in a gateway service comprising transfer of data to and/or from a radio access network of the mobile communication system and one or more gateway service receiving devices via a user equipment device; and based on an event notification from the access management function, initiating a change in a traffic routing configuration for the gateway service.

Apparatus comprising: means for broadcasting a message announcing to receiving devices a gateway service for transfer of data to and/or from a radio access network of a mobile communication system via the apparatus.

The apparatus may further comprise: means for detecting transmission of one or more gateway service requests from one or more gateway service requesting devices; and means for transmitting a registration request message for an access management function of the mobile communication system, and the registration request message may comprise a request to register the apparatus as a gateway service provider between the radio access network and the one or more gateway service requesting devices.

The registration request message may indicate one or more identifiers by which the access management function is able to check authorisation of the one or more gateway service requesting devices to receive the gateway service and/or check authorisation of the apparatus to provide the gateway service.

The registration request message may carry information by which the access management function is able to check that one or more conditions for the gateway service are met.

The apparatus may further comprise: means for receiving a registration accept message from the access management function; and means for providing the gateway service to one or more of the gateway service requesting devices; and the registration accept message may indicate one or more of: one or more gateway service requesting devices for which the apparatus is authorised to provide the gateway service; and/or a length of time for which the apparatus is authorised to provide the gateway service; and/or one or more applications for which the apparatus is authorised to provide the gateway service.

The apparatus may further comprise: means for sending a further registration request message for the access management function indicating that the apparatus is no longer providing the gateway service.

The apparatus may further comprise: means for transmitting, to a device, a request for the device to provide the apparatus with gateway service for transfer of data to and/or from a radio access network of the mobile communication system.

Apparatus comprising: means for detecting, from a transmission by a user equipment device having user equipment functionality in a mobile communication system, an announcement by the user equipment device of a gateway service for transfer of data to and/or from a radio access network of the mobile communication system via the user equipment device.

The apparatus may further comprise: means for transmitting, for the user equipment device, a request to receive the gateway service from the user equipment device, and the request may indicate an identifier by which an access management function of the mobile communication system can check for authorisation to receive the gateway service.

Apparatus, comprising: means for receiving a registration request message from a user equipment device; wherein the registration request message comprises a request to register the user equipment device as a gateway service provider of a gateway service comprising transfer of data between the radio access network and one or more gateway service requesting devices.

The registration request message may indicate one or more identifiers for the one or more gateway service requesting devices; and the apparatus may further comprise means for using the identifiers to check for authorisation of the one or more gateway service requesting devices to receive the gateway service.

The apparatus may further comprise: means for receiving, from a data management entity, subscription information about a subscription associated with a group of devices including the user equipment device; and means for determining, based on the received subscription information, whether to accept or reject the registration request based at least on an indication from the data management entity of a maximum number of group devices allowed to receive the gateway service from the user equipment device.

The apparatus may further comprise: means for determining to accept the registration request; and means for sending a registration accept message for the user equipment device; wherein the registration accept message indicates one or more of: one or more gateway service requesting devices for which the user equipment device is authorised to provide the gateway service; and/or a length of time for which the user equipment device is authorised to provide the gateway service; and/or one or more applications for which the user equipment device is authorised to provide the gateway service.

The apparatus may further comprise: means for determining to accept the registration request for less than all the gateway service requesting devices indicated in the registration request message; and means for sending a registration accept message for the user equipment device; and the registration request message may indicate the one or more gateway service requesting devices for which the registration request is accepted, and indicate that the registration request is rejected for other gateway service requesting devices for reason of a limit on the total number of devices allowed to receive the gateway service from the user equipment device.

The apparatus may further comprise: means for determining to reject the registration request, based on an indication from the data management entity of a maximum number of group devices allowed to receive the gateway service from the user equipment device, and/or information from the data management entity about a subscription policy for the group of devices: and means for sending a registration reject message for the user equipment device; and the registration reject message may indicate a cause of determining to reject the registration request.

The apparatus may further comprise: means for determining, from the registration request message, that one of the gateway service requesting devices indicated in the registration request message was previously providing a gateway service; and means for sending a message for an access management function for the device previously providing the gateway service; wherein the message indicates a change in gateway for the gateway service.

Apparatus comprising: means for receiving a registration request message from a first user equipment device; wherein the registration request message indicates that the first user equipment device has ceased to provide a gateway service comprising transfer of data between the radio access network and one or more gateway service requesting devices via the first user equipment device; means for sending a message for a data management entity, wherein the message indicates to the data management entity that the first user equipment device has ceased to provide the gateway service, and indicates a second user equipment device via which the user equipment is now receiving gateway service; and means for sending a message for an access management function for the second user equipment device, wherein the message indicates context information for the first user equipment device.

Apparatus comprising: means for, in response to a request from an access management function of a mobile communication system, sending a message for the access management device comprising subscription information about a subscription to the mobile communication system; wherein the subscription information indicates one or more allowed parameters for a gateway service comprising transfer of data between a radio access network of the mobile communication system and one or more gateway service receiving devices via a user equipment device.

The subscription information may relate to a subscription shared by a group of devices at least including one or more user equipment devices capable of providing the gateway service.

The subscription information may indicate one or more of the following: maximum number of devices of the group allowed to receive the gateway service from a user equipment device of the group; which one or more user equipment devices of the group are allowed to provide the gateway service; and maximum number of devices of the group allowed to provide the gateway service at the same time.

Apparatus comprising: means for subscribing to an event notification service comprising receiving one or more event notifications from an access management function of a mobile communication system about events comprising changes in a gateway service comprising transfer of data to and/or from a radio access network of the mobile communication system and one or more gateway service receiving devices via a user equipment device; and means for, based on an event notification from the access management function, initiating a change in a traffic routing configuration for the gateway service.

Apparatus comprising: broadcasting circuitry for broadcasting a message announcing to receiving devices a gateway service for transfer of data to and/or from a radio access network of a mobile communication system via the apparatus.

Apparatus comprising: detecting circuitry for detecting, from a transmission by a user equipment device having user equipment functionality in a mobile communication system, an announcement by the user equipment device of a gateway service for transfer of data to and/or from a radio access network of the mobile communication system via the user equipment device.

Apparatus, comprising: receiving circuitry for receiving a registration request message from a user equipment device; wherein the registration request message comprises a request to register the user equipment device as a gateway service provider of a gateway service comprising transfer of data between the radio access network and one or more gateway service requesting devices.

Apparatus comprising: receiving circuitry for receiving a registration request message from a first user equipment device; wherein the registration request message indicates that the first user equipment device has ceased to provide a gateway service comprising transfer of data between the radio access network and one or more gateway service requesting devices via the first user equipment device; sending circuitry for sending a message for a data management entity, wherein the message indicates to the data management entity that the first user equipment device has ceased to provide the gateway service, and indicates a second user equipment device via which the user equipment is now receiving gateway service; and sending circuitry for sending a message for an access management function for the second user equipment device, wherein the message indicates context information for the first user equipment device.

Apparatus comprising: sending circuitry for, in response to a request from an access management function of a mobile communication system, sending a message for the access management device comprising subscription information about a subscription to the mobile communication system; wherein the subscription information indicates one or more allowed parameters for a gateway service comprising transfer of data between a radio access network of the mobile communication system and one or more gateway service receiving devices via a user equipment device.

Apparatus comprising: subscribing circuitry for subscribing to an event notification service comprising receiving one or more event notifications from an access management function of a mobile communication system about events comprising changes in a gateway service comprising transfer of data to and/or from a radio access network of the mobile communication system and one or more gateway service receiving devices via a user equipment device; and initiating circuitry for, based on an event notification from the access management function, initiating a change in a traffic routing configuration for the gateway service.

A computer readable medium comprising program instructions stored thereon for performing: broadcasting, from a user equipment device having user equipment functionality in a mobile communication system, a message announcing to receiving devices a gateway service for transfer of data to and/or from a radio access network of the mobile communication system via the user equipment device.

A computer readable medium comprising program instructions stored thereon for performing: detecting, from a transmission by a user equipment device having user equipment functionality in a mobile communication system, an announcement by the user equipment device of a gateway service for transfer of data to and/or from a radio access network of the mobile communication system via the user equipment device.

A computer readable medium comprising program instructions stored thereon for performing: receiving a registration request message from a user equipment device; wherein the registration request message comprises a request to register the user equipment device as a gateway service provider of a gateway service comprising transfer of data between the radio access network and one or more gateway service requesting devices.

A computer readable medium comprising program instructions stored thereon for performing: receiving a registration request message from a first user equipment device; wherein the registration request message indicates that the first user equipment device has ceased to provide a gateway service comprising transfer of data between the radio access network and one or more gateway service requesting devices via the first user equipment device; and sending a message for a data management entity, wherein the message indicates to the data management entity that the first user equipment device has ceased to provide the gateway service, and indicates a second user equipment device via which the user equipment is now receiving gateway service; and sending a message for an access management function for the second user equipment device, wherein the message indicates context information for the first user equipment device.

A computer readable medium comprising program instructions stored thereon for performing: in response to a request from an access management function of a mobile communication system, sending a message for the access management device comprising subscription information about a subscription to the mobile communication system; wherein the subscription information indicates one or more allowed parameters for a gateway service comprising transfer of data between a radio access network of the mobile communication system and one or more gateway service receiving devices via a user equipment device.

A computer readable medium comprising program instructions stored thereon for performing: subscribing to an event notification service comprising receiving one or more event notifications from an access management function of a mobile communication system about events comprising changes in a gateway service comprising transfer of data to and/or from a radio access network of the mobile communication system and one or more gateway service receiving devices via a user equipment device; and based on an event notification from the access management function, initiating a change in a traffic routing configuration for the gateway service.

A non-transitory computer readable medium comprising program instructions stored thereon for performing: broadcasting, from a user equipment device having user equipment functionality in a mobile communication system, a message announcing to receiving devices a gateway service for transfer of data to and/or from a radio access network of the mobile communication system via the user equipment device.

A non-transitory computer readable medium comprising program instructions stored thereon for performing: detecting, from a transmission by a user equipment device having user equipment functionality in a mobile communication system, an announcement by the user equipment device of a gateway service for transfer of data to and/or from a radio access network of the mobile communication system via the user equipment device.

A non-transitory computer readable medium comprising program instructions stored thereon for performing: receiving a registration request message from a user equipment device; wherein the registration request message comprises a request to register the user equipment device as a gateway service provider of a gateway service comprising transfer of data between the radio access network and one or more gateway service requesting devices.

A non-transitory computer readable medium comprising program instructions stored thereon for performing: receiving a registration request message from a first user equipment device; wherein the registration request message indicates that the first user equipment device has ceased to provide a gateway service comprising transfer of data between the radio access network and one or more gateway service requesting devices via the first user equipment device; sending a message for a data management entity, wherein the message indicates to the data management entity that the first user equipment device has ceased to provide the gateway service, and indicates a second user equipment device via which the user equipment is now receiving gateway service; and sending a message for an access management function for the second user equipment device, wherein the message indicates context information for the first user equipment device.

A non-transitory computer readable medium comprising program instructions stored thereon for performing: in response to a request from an access management function of a mobile communication system, sending a message for the access management device comprising subscription information about a subscription to the mobile communication system; wherein the subscription information indicates one or more allowed parameters for a gateway service comprising transfer of data between a radio access network of the mobile communication system and one or more gateway service receiving devices via a user equipment device.

A non-transitory computer readable medium comprising program instructions stored thereon for performing: subscribing to an event notification service comprising receiving one or more event notifications from an access management function of a mobile communication system about events comprising changes in a gateway service comprising transfer of data to and/or from a radio access network of the mobile communication system and one or more gateway service receiving devices via a user equipment device; and based on an event notification from the access management function, initiating a change in a traffic routing configuration for the gateway service.

A computer program comprising computer executable code which when run on at least one processor is configured to cause an apparatus at least to: broadcast, from a user equipment device having user equipment functionality in a mobile communication system, a message announcing to receiving devices a gateway service for transfer of data to and/or from a radio access network of the mobile communication system via the user equipment device.

A computer program comprising computer executable code which when run on at least one processor is configured to cause an apparatus at least to: detect, from a transmission by a user equipment device having user equipment functionality in a mobile communication system, an announcement by the user equipment device of a gateway service for transfer of data to and/or from a radio access network of the mobile communication system via the user equipment device.

A computer program comprising computer executable code which when run on at least one processor is configured to cause an apparatus at least to: receive a registration request message from a user equipment device; wherein the registration request message comprises a request to register the user equipment device as a gateway service provider of a gateway service comprising transfer of data between the radio access network and one or more gateway service requesting devices.

A computer program comprising computer executable code which when run on at least one processor is configured to cause an apparatus at least to: receive a registration request message from a first user equipment device; wherein the registration request message indicates that the first user equipment device has ceased to provide a gateway service comprising transfer of data between the radio access network and one or more gateway service requesting devices via the first user equipment device; send a message for a data management entity, wherein the message indicates to the data management entity that the first user equipment device has ceased to provide the gateway service, and indicates a second user equipment device via which the user equipment is now receiving gateway service; and send a message for an access management function for the second user equipment device, wherein the message indicates context information for the first user equipment device.

A computer program comprising computer executable code which when run on at least one processor is configured to cause an apparatus at least to: in response to a request from an access management function of a mobile communication system, send a message for the access management device comprising subscription information about a subscription to the mobile communication system; wherein the subscription information indicates one or more allowed parameters for a gateway service comprising transfer of data between a radio access network of the mobile communication system and one or more gateway service receiving devices via a user equipment device.

A computer program comprising computer executable code which when run on at least one processor is configured to cause an apparatus at least to: subscribe to an event notification service comprising receiving one or more event notifications from an access management function of a mobile communication system about events comprising changes in a gateway service comprising transfer of data to and/or from a radio access network of the mobile communication system and one or more gateway service receiving devices via a user equipment device; and based on an event notification from the access management function, initiate a change in a traffic routing configuration for the gateway service.

In the above, many different aspects have been described. It should be appreciated that further aspects may be provided by the combination of any two or more of the aspects described above.

Various other aspects are also described in the following detailed description of example embodiments and in the claims.

### BRIEF DESCRIPTION OF THE FIGURES

Some example embodiments will now be described in further detail, by way of example only, with reference to the following examples and accompanying drawings, in which:
Figure 1 illustrates an example system to which embodiments may be applied;
Figure 2 shows a representation of an example of operations at one or more components of Figure 1 according to example embodiments;
Figure 3 shows a representation of an example of further operations at one or more components of Figure 1 according to example embodiments;
Figure 4 shows a representation of an example of further operations at components of Figure 1 according to example embodiments;
Figure 5 shows a representation of another example of further operations at components of Figure 1 according to example embodiments;
Figure 6 shows a representation of an example of further operations at components of Figure 1 according to example embodiments;
Figure 7 shows a representation of an example of further operations at components of Figure 1 according to example embodiments;
Figure 8 shows a representation of an example of further operations at components of Figure 1 according to example embodiments;
Figure 9 shows a representation of an example of apparatus for implementing operations at a network function of Figure 1 according to example embodiments;
Figure 10 shows a representation of an example of apparatus for implementing operations at a PIN device of Figure 1 according to example embodiments;
Figure 11 shows a representation of an example of non-volatile memory media.

### DETAILED DESCRIPTION

The following description of example embodiments makes mention of systems (user equipments, RAN nodes, core network nodes) operating according to specific 3GPP protocols (e.g. 5G protocol), but the underlying technique is also applicable to systems operating according to other protocols, such as more evolved 3GPP protocols.

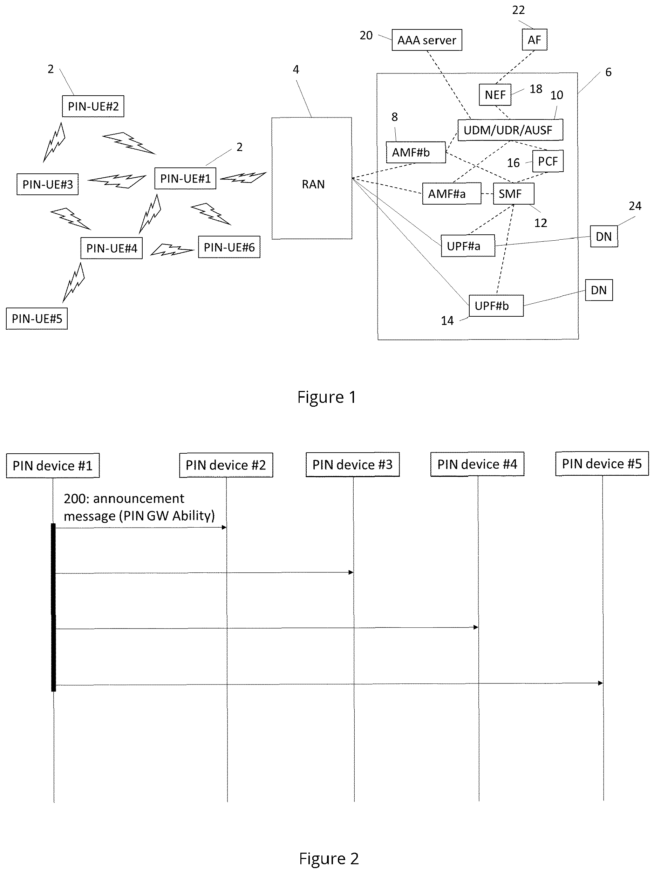

Figure 1 depicts an example of a simplified system architecture for a 3GPP 5GS mobile communication system, only showing some elements and functional entities. All elements and functional entities are logical units, whose implementation may differ from what is shown.

The connections shown in Figure 1 are logical connections; the actual physical connections may be different. The 5G system may include other functions and structures than those shown in Figure 1.

The radio access network (RAN) 4 includes gNBs that are configured to communicate with one another over links, wired or wireless, designed for the purpose. These links may be used for signalling purposes. A gNB is a computing device configured to control the radio resources of communication system it is coupled to. A gNB may also be referred to as a base station, an access point or any other type of interfacing device including a relay station capable of operating in a wireless environment. A gNB includes or is coupled to transceivers. From the transceivers of a gNB, a connection is provided to an antenna unit that establishes bi-directional radio links to devices. The antenna unit may include a plurality of antennas or antenna elements. A gNB is further connected to the core network 6 (CN or next generation core NGC). A gNB is connected to one or more user plane functions (UPF) 14, for routing and forwarding user data packets and for providing connectivity of devices to one or more external packet data networks 24. A gNB is also connected to one or more access mobility management functions (AMF) 8, for controlling access and mobility of devices served by the 3GPP mobile communication system.

The 5G mobile communication system may provide a plurality of different kinds of radio cells. Radio cells may be macro cells (or umbrella cells) which are large cells, usually having a diameter of up to tens of kilometers, or smaller cells such as micro-, femto- or picocells. One or more of the gNBs may be what is referred to in relation to 5G as a Premises Radio Access Station, which is a base station installed at a customer premises network primarily for use within a residence, office or shop.

5G uses multiple input - multiple output (MIMO) antennas, many more base stations or nodes than the 4G LTE, including macro sites operating in co-operation with smaller stations and employing a variety of radio technologies depending on service needs, use cases and/or spectrum available. A 5G mobile communication system supports a wide range of use cases and related applications including video streaming, augmented reality, different ways of data sharing and various forms of machine type applications (such as (massive) machine-type communications (mMTC), including vehicular safety, different sensors and real-time control). A 5G system may have multiple radio interfaces, e.g. below 6GHz or above 24 GHz, cmWave and mmWave, and may be integrable with existing legacy radio access technologies, such as LTE. Integration with LTE may be implemented as a system, where macro coverage is provided by the LTE and 5G radio interface access comes from small cells by aggregation to the LTE. In other words, 5G may support both inter-RAT operability (such as LTE-5G) and inter-RI operability (inter-radio interface operability, such as below 6GHz - cmWave, 6 or above 24 GHz - cmWave and mmWave). Network slicing may be used in 5G networks. Multiple independent and dedicated virtual sub-networks (network instances) may be created within the same infrastructure to run services that have different requirements on latency, reliability, throughput and mobility.

Low latency applications and services may be facilitated in a 5G system by bringing content close to the radio which leads to local break out and multi-access edge computing (MEC). 5G enables analytics and knowledge generation to occur at the source of the data. This approach may involve leveraging resources - that may not be continuously connected to a network - such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The 3GPP mobile communication system is also able to communicate with other networks, such as a public switched telephone network, or a VoIP network, or the Internet, or a private network, or utilize services provided by them. The 3GPP mobile communication system may also be able to support the usage of cloud services. For example, at least part of core network operations may be carried out as a cloud service

The technology of Edge cloud may be brought into the RAN 4 by utilizing network function virtualization (NFV) and software defined networking (SDN). Using the technology of edge cloud may mean access node operations to be carried out, at least partly, in a server, host or node operationally coupled to a remote radio head or base station including radio parts. Node operations may be distributed among a plurality of servers, nodes or hosts. Application of cloudRAN architecture enables RAN real time functions being carried out at or close to a remote antenna site (in a distributed unit, DU) and non-real time functions being carried out in a centralized manner (in a centralized unit, CU).

A 3GPP 5G mobile communication system may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, Mobile Broadband (MBB), or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

With reference to Figure 1, a plurality of devices 2 (such as a plurality of Personal Internet-of-Things (IoT) devices) belonging to a Personal IoT network (PIN) have an ability to communicate directly (other than via a radio access network (RAN) 4 of the 3GPP mobile communication system also including a core network (CN) 6) with each other. The following description focusses on the example of using 3GPP ProSe discovery and 3GPP PC5 interfaces for direct communication between PIN devices 2; but other discovery mechanisms and/or radio interfaces may also be used, such as non-3GPP discovery mechanisms and/or radio interfaces. Direct communication between the PIN devices 2 via 3GPP PC5 interfaces may, for example, include the transfer between PIN devices 2 of data that does not go beyond the group of PIN devices. As discussed below, direct communication between the PIN devices 2 via 3GPP PC5 interfaces is also performed for the purpose of a first PIN device 2 using a second PIN device 2 as a gateway for the transfer of data between the first PIN device 2 and a data network via the 3GPP mobile communication system (possibly also via one or more other PIN devices 2 acting as relay devices between the first and second PIN devices 2). For example, PIN Device#5 in Figure 1 may transfer data to/from a data network 24 via PIN Device#4 (acting as relay between PIN Device#5 and PIN Device#1) and PIN Device#1 (acting as gateway to the 3GPP mobile communication system).

Some or all of the PIN devices 2 may be user equipment devices having a subscription to the 3GPP mobile communication system. Some of the PIN devices 2 may not have a subscription to the 3GPP mobile communication system, but (as mentioned above) are nonetheless enabled for 3GPP ProSe/D2D communications with other PIN devices 2. PIN devices 2 without a 3GPP subscription cannot have a direct connection with the radio access network of the 3GPP mobile communication system for the direct transfer to/from a data network via the 3GPP mobile communication system, but instead may use, for the transfer of data to and/or from a data network 24 via the 3GPP mobile communication system, a gateway service provided by one or more of the other PIN devices 2 that does have a 3GPP subscription. One or more of the PIN devices 2 having a subscription to the 3GPP mobile communication system may also use one of the other PIN devices 2 having a subscription to the 3GPP mobile communication system as a gateway service provider for the transfer of data to and/or from a data network 24 via the 3GPP mobile communication system. For all the above, the communication between one PIN device 2 and another PIN device 2 acting as gateway may be via one more other PIN devices 2 acting as relay devices between the two PIN devices 2.

Each PIN device 2 is part of a PIN group identified by a PIN identifier ID, by which the PIN devices 2 are affiliated with each other.

In this example, one of the PIN devices 2 (PIN Device #1) having a subscription to the 3GPP mobile communication system determines to offer a PIN gateway service to other PIN devices 2 in the same PIN group. This determination may, for example, be based on one or more of the following conditions: time of day; location of PIN Device# 1; application usage at PIN Device# 1; user setting at PIN Device# 1.

PIN Device# 1 transmits, via 3GPP Uu radio interface, a 3GPP ProSe Discovery Request message to obtain authorisation to access radio resources for performing ProSe Direct Discovery for discovering other devices in range of PIN Device# 1.

With reference to Figure 2, PIN Device# 1 broadcasts (OPERATION 200) an announcement message via the 3GPP PC5 radio interface to advertise its presence, according to a 3GPP Model A ProSe discovery mechanism, using radio resources authorised by the 3GPP mobile communication system. PIN devices 2 actively listen for ProSe announcement messages by other PIN devices 2. A PIN device 2 detecting the announcement message from PIN Device# 1 may establish a direct connection with PIN Device# 1 for one-to-one ProSe direct communication with PIN Device# 1. The discovery process may be a restricted discovery type in which only devices that are affiliated with each other (e.g. devices sharing the same Discovery Group ID) are able to discover each other.

The ProSe announcement message broadcast by PIN device#1 may indicate an offer to provide a gateway service including the transfer of data to and/or from a data network via the PIN Device#1 and the radio access network of the 3GPP mobile communication system. This indication is hereafter referred to as a "PIN GW ability" indication, indicating an ability to provide gateway service subject to acceptance by the AMF 8 serving PIN Device# 1. A PIN device 2 detecting this announcement message from PIN Device#1 may itself broadcast a ProSe announcement message indicating an offer to provide a relayed gateway service via PIN Device #1. The gateway service offered by PIN Device#1 can thus be extended to PIN devices out of range of PIN Device#1 by using one or more other PIN devices as relay devices.

Other PIN devices 2 in the PIN group may or may not determine to receive the gateway service being offered by PIN Device#1 (directly or via one or more relay PIN devices). This determination may, for example, be based on one or more conditions, including: time of day; location of the PIN device; application usage at the PIN device; user setting at the PIN device.

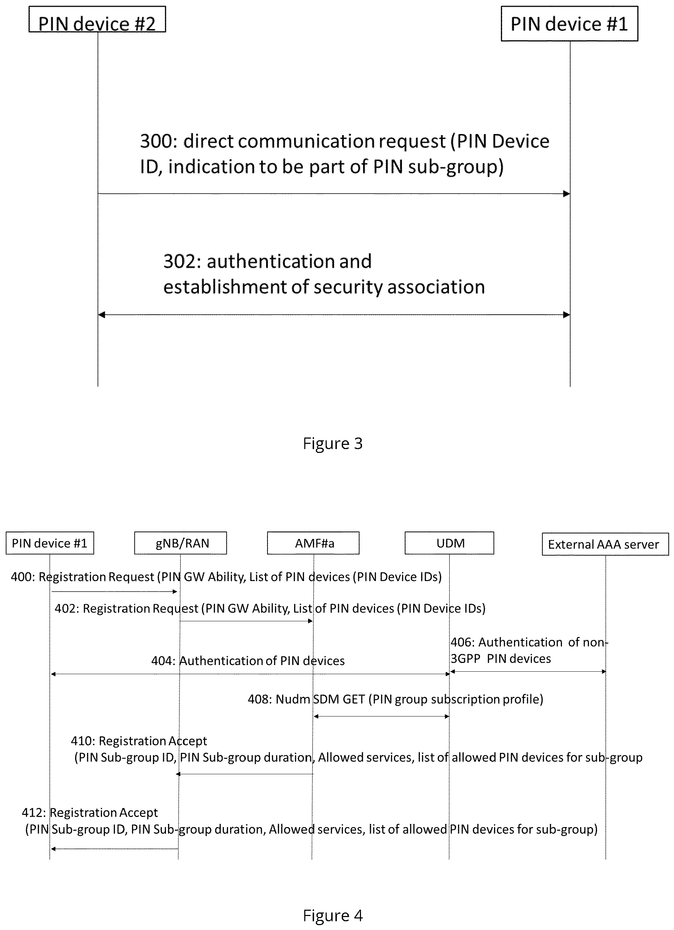

With reference to Figure 3: a PIN device 2 (e.g. PIN Device#2 in Figure 1) that determines to receive the gateway service offered by PIN Device#1 transmits (OPERATION 300), via the 3GPP PC5 radio interface, a Direct Communication Request for PIN Device# 1, which Direct Communication Request includes a request to establish a one-to-one direct communication with PIN Device# 1. The Direct Communication Request includes: a request to receive the gateway service offered by PIN Device# 1; and the PIN Device ID for the gateway service requesting PIN Device#2. This Direct Communication Request message is followed by direct communications between PIN Device# 1 and the gateway service requesting PIN device (PIN Device#2) for authentication and establishment of security associations (OPERATION 302).

With reference to Figure 4: PIN Device#1 transmits, via a 3GPP Uu radio interface between PIN Device#1 and the gNB serving PIN Device#1, a Registration Request message for an access management function (AMF) 8 of the 3GPP mobile communication system. The serving gNB of RAN 4 forwards the Registration Request message to the AMF 8 for PIN Device#1 (AMF#a).

The Registration Request message includes the "PIN GW ability" indication, and a list of PIN device IDs for the PIN devices for which PIN Device# 1 received a direct communication request to receive gateway service from PIN Device# 1.

The Registration Request message may also indicate an individual priority value for each PIN device in the PIN sub-group. PIN Device#1 obtains this priority information during the ProSe discovery process mentioned above. A use of these individual priority values is described further below.

AMF#a 8 initiates an authentication procedure (OPERATIONS 404 AND 406) to authenticate PIN Device#1 and the other PIN devices identified by respective PIN IDs in the Registration Request message from PIN Device# 1. This authentication procedure may involve UDM 10 for PIN devices having a subscription to the 3GPP mobile communication system (devices managed by the operator of the 3GPP mobile communication system); and may involve an external AAA server 20 (outside the 3GPP mobile communication system) for any PIN devices without a 3GPP subscription (devices not managed by the operator of the 3GPP mobile communication system).

AMF#a 8 also initiates a Nudm SDM (subscription data management) GET procedure (OPERATION 408) to obtain, from UDM 10, PIN group subscription profile information for the PIN group identified by the PIN Group ID associated with PIN Device# 1.

UDM 10 has a common subscription for the PIN group. UDM 10 outputs a message for AMF#a 8 including PIN group subscription profile information for the PIN group. In this example, the PIN group subscription profile information includes the following: (1) an indication of the maximum duration of time for which a gateway service may be active; (2) the maximum number of PIN devices allowed for a PIN sub-group for a gateway service; (3) the maximum number of PIN devices allowed to provide gateway service at any one time; and (4) a list of the PIN IDs for the PIN devices allowed to provide the gateway service within the PIN group.

Based on the PIN group subscription profile information received from UDM 10, AMF#a 8 determines whether to accept the registration of PIN Device#1 as a gateway service provider for the PIN devices indicated in the Registration Request message.

In the example of Figure 4: AMF#a 8 determines that the conditions are met for the establishment of a PIN sub-group led by PIN Device#1 as gateway device; and AMF#a 8 outputs a Registration Accept message for PIN Device#1 (OPERATION 410). Serving gNB of RAN 4 forwards the Registration Accept message to PIN Device#1 (OPERATION 412).

Together, the PIN device providing the gateway service and the PIN devices receiving gateway service from that PIN device are referred to here as a PIN sub-group (which may be a sub-set of the group of PIN devices sharing a PIN group ID). AMF#a 8 dynamically assigns a PIN sub-group ID to this PIN sub-group.

The Registration Accept message indicates the following: (1) the PIN sub-group ID dynamically assigned by AMF#a 8 to the PIN sub-group for PIN management; (2) the maximum duration for which the PIN sub-group may be active (before needing to send a new registration request); (3) an indication of the applications allowed for the PIN sub-group; and (4) a list of PIN device IDs allowed for the PIN sub-group.

AMF#a 8 ensures that each PIN device successfully registered to receive gateway service is associated uniquely with one PIN GW device for any communication/notification to the PIN device.

If, after successful registration of the PIN sub-group led by PIN Device# 1, PIN Device# 1 (PIN GW device) receives a request from another PIN device to join the PIN sub-group, and/or an existing PIN device within the PIN sub-group indicates withdrawal from the PIN sub-group: PIN Device#1 (PIN GW device for the PIN sub-group) triggers a registration update procedure to update the 3GPP mobile communication system accordingly.

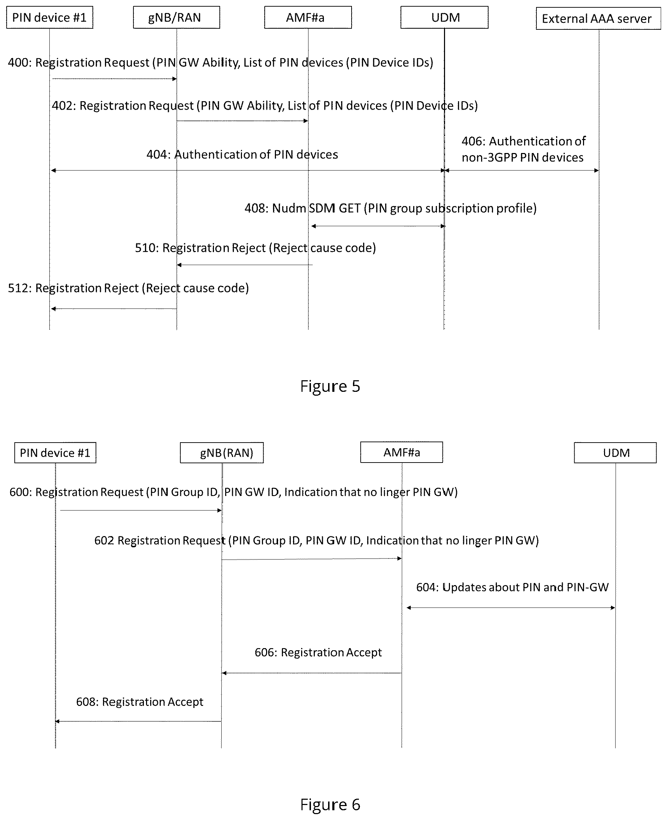

In the example of Figure 5: AMF#a 8 instead determines that the conditions are not met for the establishment of a PIN sub-group led by PIN Device#1 as gateway device; and AMF#a 8 outputs a Registration Reject message for PIN Device#1 (OPERATION 510). Serving gNB of RAN 4 forwards the Registration Reject message to PIN Device#1 (OPERATION 512). The Registration Reject message includes an indication (e.g. a reject cause code) of the cause of the failure to register the PIN sub-group led by PIN Device#1 as gateway device.

For example, AMF#a 8 may output a Registration Reject message for PIN Device#1, if AMF#a 8 determines that there are already one or more other devices within the PIN group that are providing gateway service, and that the number of PIN GW devices within the PIN group is already at the maximum number indicated in the PIN group subscription profile information received from UDM 10.

According to another example: AMF#a 8 may output a Registration Reject message for PIN Device#1 if AMF#a 8 determines that accepting the PIN sub-group would take the total number of PIN devices receiving gateway service within the PIN group above the maximum allowed number indicated in the PIN group subscription profile information received from UDM 10. Alternatively, in such a situation, AMF#a 8 may accept the PIN sub-group but with limitation on which of the PIN devices indicated in the Registration Request message from PIN Device#1 may receive the gateway service via PIN Device#1 (i.e. with limitation on which PIN devices may belong to the PIN sub-group led by PIN Device# 1 as gateway device). This limitation may be based on the individual priority values indicated for each PIN device in the Registration Request message from PIN Device# 1. PIN devices with a higher priority value may be preferred for receiving the gateway service (i.e. preferred for inclusion in the PIN sub-group) over PIN devices with a lower priority value.

Figure 6 illustrates an example of operations in the event that: (a) PIN device#1 (PIN GW device for the PIN sub-group) receives a Registration Accept message and starts providing gateway service to the PIN devices in the PIN sub-group led by PIN Device# 1; and (b) PIN Device#1 later ceases to provide gateway service. PIN Device#1 ceasing to provide gateway service may occur e.g. (a) because PIN Device#1 goes out of coverage of the 3GPP mobile communication system, or (b) because of the result of some internal configuration of PIN Device# 1, or (c) in response to a time/location/application based trigger.

PIN Device#1 broadcasts, via the 3GPP PC5 radio interface, an Announcement message including an indication that PIN Device#1 is no longer providing gateway service (e.g. that PIN Device#1 is no longer a PIN GW device).

PIN Device#1 further releases the one-to-one connections with PIN devices 2 of the PIN sub-group for which PIN Device#1 was the PIN GW device.

This action taken by PIN Device#1 may trigger one of the PIN devices 2 for which PIN Device#1 was providing gateway service (e.g. PIN device#2) to (i) broadcast an Announcement Message indicating an offer to provide gateway service including the transfer of data to and/or from the RAN 4 via the PIN Device #2, and to (ii) perform the other operations shown in Figures 3 to 5, in response to receiving request(s) from other PIN device(s) to receive gateway service from PIN Device#2. The PIN devices that request gateway service from PIN#2 device 2 may include some or all of the PIN devices that were part of the ceased PIN sub-group led by PIN Device# 1, and/or may include PIN Device #1 (e.g. PIN GW device for the ceased PIN sub-group).

According to one example, PIN Device#1 also transmits, via 3GPP Uu radio interface, a registration request message for AMF#a 8 indicating that it is no longer providing the gateway service (OPERATION 600). Serving gNB of RAN 4 forwards the Registration Request message to AMF#a 8 for PIN Device#1 (OPERATION 602). The Registration Request message includes: the PIN group ID; and an indication that PIN Device#1 is no longer providing the gateway service (i.e. is no longer a PIN GW device). This Registration Request message may also indicate that PIN Device#1 has requested to receive gateway service from another PIN device within the PIN group.

AMF#a 8 communicates with UDM 10 regarding this change in the state of the PIN group identified by the PIN group ID (OPERATION 604).

AMF#a 8 outputs a Registration Accept message for PIN Device#1 (OPERATION 606); and serving gNB of RAN 4 forwards the Registration Accept message to PIN Device# 1 (OPERATION 608).

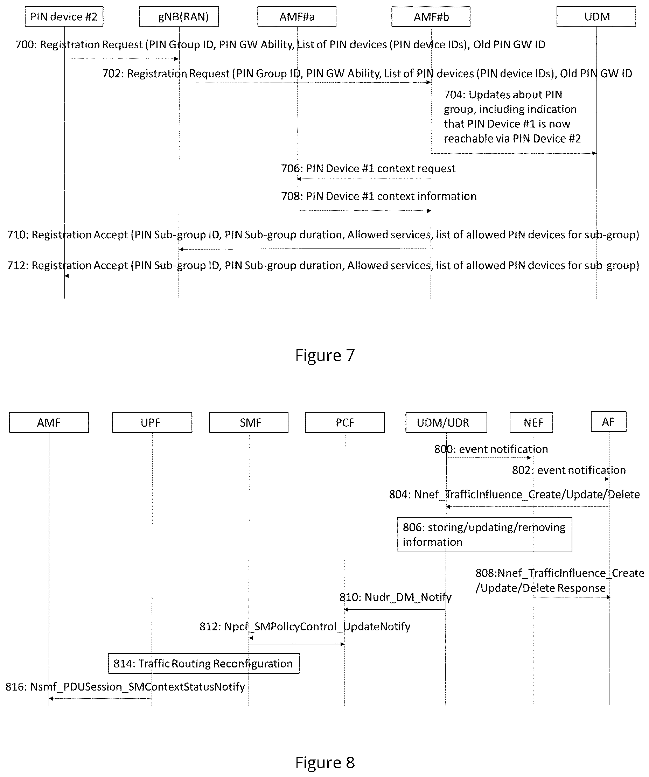

According to another example shown in Figure 7, updating of the UDM 10 for device management purposes starts with a Registration Request message from a PIN device for which PIN Device# 1 was providing gateway service (e.g. PIN Device#2), and which has received requests from other PIN devices within the PIN group (including PIN Device# 1 (e.g. the old PIN GW device)) to provide gateway service.

PIN Device#2 transmits, via 3GPP Uu radio interface, a Registration Request message for an AMF 8 for PIN Device#2, which may or may not be the same AMF as that for PIN Device#1 (OPERATION 700). Figure 7 shows a representation of operations for the example in which PIN Device#1 and PIN Device#2 are served by different AMF instances, AMF#a and AMF#b. Serving gNB of RAN 4 forwards the Registration Request message to the AMF for PIN Device#2 (AMF#b) (OPERATION 702).

The Registration Request includes: the "PIN GW ability" indication mentioned earlier; a list of PIN device IDs for the PIN devices for which PIN Device#2 received a request to receive gateway service from PIN Device#2, including the PIN ID for PIN Device#1 (e.g. the old PIN GW device); and an indication that PIN Device# 1 was previously providing gateway service for PIN Device #2 and other PIN devices within the PIN group.

AMF#b updates UDM 10 about the change for the PIN group (OPERATION 704). In particular, AMF#b informs UDM 10 that PIN Device#1 is now reachable via PIN Device#2.

AMF#b also sends (OPERATION 706) to AMF#a (the AMF instance serving PIN Device#1) a request for context information for PIN Device# 1, which context request indicates to AMF#a that PIN Device#1 is no longer a PIN GW device, and is now reachable via PIN Device#2. In response, AMF#a provides AMF#b with the context information for PIN Device#1 (OPERATION 708). The context information includes the session management function(s), S-NSSAI, DNN etc. for PIN Device# 1. This context information assists the transfer of existing PDU sessions under new management by AMF#b (AMF for PIN Device#2 (new PIN GW device) without the need to establish new PDU sessions.

AMF#a (AMF for PIN Device#1 (PIN GW device for ceased PIN sub-group)) also informs UDM 10 that PIN Device# 1 is no longer a PIN GW device but is instead a secondary PIN device reachable via PIN Device#2.

AMF#b initiates authentication and authorisation operations (not shown in Figure 7) for the PIN devices indicated in the Registration Request from PIN#2 device (e.g. the kind of operations indicated by OPERATIONS 406 AND 408 in Figure 4). Subject to fulfilment of the conditions for establishing a PIN sub-group led by PIN Device#2 as PIN GW device, AMF#b outputs (OPERATION 710) for PIN Device#2 a Registration Accept message of the kind described earlier in relation to Figure 4; and serving gNB of RAN 4 forwards the Registration Accept message to PIN Device#2 (OPERATION 712).

Figure 8 shows a representation of an example of operations in the system of Figure 1 for steering traffic in response to a PIN GW change.

An application function (AF) 22 has subscribed to a UDM service including providing event notifications about a PIN GW change. In response to an event/update involving a PIN GW change, UDM 10 outputs an event notification for AF 22 (OPERATION 800), which is provided to AF via network exposure function (NEF) 18 (OPERATION 802). In response to the event notification from UDM 10, AF 22 determines to influence traffic to a new PIN GW by indicating a policy to be applied at the 3GPP Policy Control Function (PCF) 16. AF 22 sends to UDR 10 a 3GPP Nnef_TrafficInfluence_Create/Update/Delete message (OPERATION 804). This Nnef_TrafficInfluence_Create/Update/Delete message triggers UDR/NEF to change the information at UDR/NEF (by storing new information, and/or updating existing information, and/or removing existing information) based on the content of the Nnef_TrafficInfluence_Create/Update/Delete message (OPERATION 806), and to send to AF 22 a 3GPP Nnef_TrafficInfluence_Create/Update/Delete Response message (OPERATION 808). A change in information at UDR/NEF triggers UDR to send a 3GPP Nudr_DM_Notify message to PCF 16 (OPERATION 810). The receipt of this Nudr_DM_Notify message at PCF 16 triggers PCF 16 to send a 3GPP Npcf_SMPolicyControl_UpdateNotify message to SMF 12. The receipt of this Npcf_SMPolicyControl_UpdateNotify message at SMF 12 triggers a traffic routing reconfiguration (OPERATION 814). 3GPP User Plane Function (UPF) 14 sends a 3GPP Nsmf_PDUSession_SMContextStatusNotify to AMF 8 for the PIN GW device (OPERATION 816).

In the techniques described above, the PIN devices within a PIN group may, for example, include wearable devices (such as AR/VR (augmented reality/virtual reality) glasses, wireless earbuds, smart rings etc.) and a smartphone. In addition to the smartphone, one or more of the wearable devices may also provide gateway service. There is no restriction on always using the smartphone to provide gateway service.

The above-described techniques provide an efficient way to dynamically and effectively manage a network of e.g. Personal IoT devices. The above-described techniques facilitate the use of different PIN devices (within a PIN group) as gateway devices at different times of the day and/or for different applications/usages and/or device location.

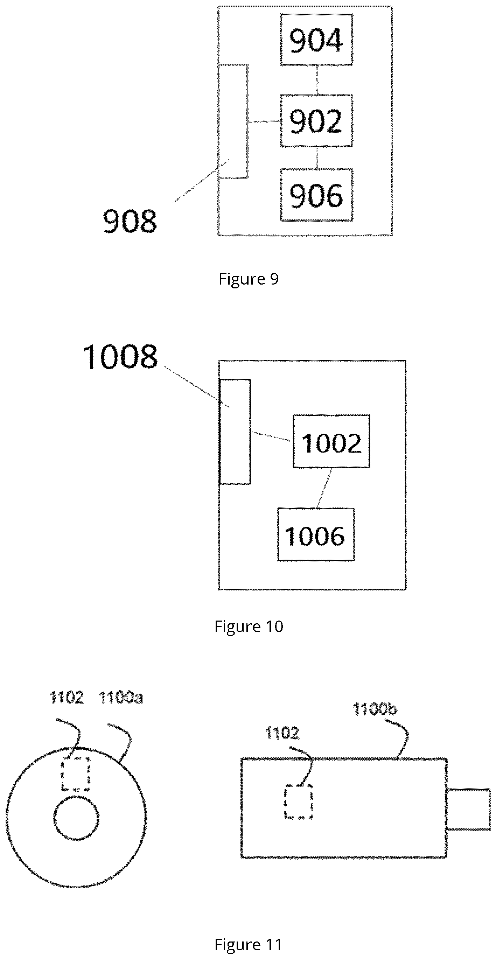

Figure 9 illustrates an example of an apparatus for implementing the UE functionality of a PIN user equipment device 2 in the embodiments described above. The apparatus may include at least one processor 902 coupled to one or more interfaces 908. The one or more interfaces 908 may be to e.g. other equipment for which the UE functionality provides radio communications. For the example of gNB 104, the one or more interfaces 808 may be to e.g. core network nodes such as the node implementing the AMF 200. The at least one processor 902 is also coupled to a radio unit 904 including one or more antennas etc. for making and receiving radio transmissions via the 3GPP PC5 and Uu radio interfaces. The at least one processor 902 may also be coupled to at least one memory 906. The at least one processor 902 may be configured to execute an appropriate software code to perform the operations described above. The software code may be stored in the memory 906.

Figure 10 illustrates an example of an apparatus for implementing any of the network functions in the embodiments described above. The apparatus may include at least one processor 1002 coupled to one or more interfaces 1008. The one or more interfaces 1008 may be for communication with RAN nodes 104 or other network functions. The at least one processor 1002 may also be coupled to at least one memory 1006. The at least one processor 1002 may be configured to execute an appropriate software code to perform the operations described above. The software code may be stored in the memory 1006.

Figure 11 shows a schematic representation of non-volatile memory media 1100a (e.g. computer disc (CD) or digital versatile disc (DVD)) and 1100b (e.g. universal serial bus (USB) memory stick) storing instructions and/or parameters 1102 which when executed by a processor allows the processor to perform one or more of the steps of the methods described previously.

It is to be noted that example embodiments may be implemented as circuitry, in software, hardware, application logic or a combination of software, hardware and application logic. In an example embodiment, the application logic, software or an instruction set is maintained on any computer-readable media. In the context of this document, a "computer-readable medium" may be any media or means that can contain, store, communicate, propagate or transport the instructions for use by or in connection with an instruction execution system, apparatus, or device, such as the base stations or user equipment of the above-described example embodiments.

As used in this application, the term "circuitry" refers to all of the following: (a) hardware- only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as the user equipment or base stations of the above-described embodiments, to perform various functions) and (c) to circuits, such as a microprocessor(s) or a portion of a microprocessor(s), that require software or firmware for operation, even if the software or firmware is not physically present. This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

The features, advantages, and characteristics described herein can be combined in any suitable manner in one or more example embodiments. One skilled in the relevant art will recognize that such example embodiments can be practiced without one or more of the specific features or advantages of a particular embodiment. In other instances, additional features and advantages can be recognized in certain embodiments that may not be present in all example embodiments. One having ordinary skill in the art will readily understand that the example embodiments as discussed above may be practiced with steps in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of example embodiments.

## Claims

1. Apparatus comprising:
means for broadcasting a message announcing a gateway service to receiving devices for transfer of data to and/or from a radio access network of a mobile communication system via the apparatus.

2. The apparatus according to claim 1, comprising:
means for transmitting a registration request message for an access management function of the mobile communication system, based on one or more gateway service requests from one or more gateway service requesting devices,
wherein the registration request message comprises a request to register the apparatus as a gateway service provider between the radio access network and the one or more gateway service requesting devices.

3. The apparatus according to claim 2,
wherein the registration request message indicates one or more identifiers by which the access management function is able to:
check authorisation of the one or more gateway service requesting devices to receive the gateway service and/or
check authorisation of the apparatus to provide the gateway service.

4. The apparatus according to claim 2 or claim 3,
wherein the registration request message carries information by which the access management function is able to check that one or more conditions for the gateway service are met.

5. The apparatus according to claim 3, comprising:
means for receiving a registration accept message from the access management function; and
means for providing the gateway service to one or more of the gateway service requesting devices;
wherein the registration accept message indicates one or more of:
which of the one or more gateway service requesting devices for which the apparatus is authorised to provide the gateway service; and/or
a length of time for which the apparatus is authorised to provide the gateway service; and/or
one or more applications for which the apparatus is authorised to provide the gateway service.

6. The apparatus according to claim 5, comprising:
means for sending a further registration request message for the access management function indicating that the apparatus is no longer providing the gateway service.

7. The apparatus according to claim 6, comprising:
means for transmitting, to a device, a request for the device to provide the apparatus with gateway service for transfer of data to and/or from a radio access network of the mobile communication system.

8. Apparatus comprising:
means for detecting, from a transmission by a user equipment device having user equipment functionality in a mobile communication system, an announcement of a gateway service by the user equipment device for transfer of data to and/or from a radio access network of the mobile communication system via the user equipment device.

9. The apparatus according to claim 8, comprising:
means for transmitting, for the user equipment device, a request to receive the gateway service from the user equipment device,
wherein the request indicates an identifier by which an access management function of the mobile communication system can check for authorisation to receive the gateway service.

10. Apparatus, comprising:
means for receiving a registration request message from a user equipment device;
wherein the registration request message comprises a request to register the user equipment device as a gateway service provider of a gateway service comprising transfer of data between a radio access network and one or more gateway service requesting devices.

11. The apparatus according to claim 10,
wherein the registration request message indicates one or more identifiers for the one or more gateway service requesting devices; and
wherein the apparatus comprises means for using the one or more identifiers to check for authorisation of the one or more gateway service requesting devices to receive the gateway service.

12. The apparatus according to claim 10, comprising:
means for receiving, from a data management entity, subscription information about a subscription associated with a group of devices including the user equipment device; and
means for determining whether to accept or reject the registration request based on the received subscription information, the received subscription information including an indication from the data management entity of a maximum number of group devices allowed to receive the gateway service from the user equipment device.

13. The apparatus according to claim 12, comprising:
means for determining to accept the registration request; and
means for sending a registration accept message for the user equipment device;
wherein the registration accept message indicates one or more of:
which of the one or more gateway service requesting devices for which the user equipment device is authorised to provide the gateway service; and/or
a length of time for which the user equipment device is authorised to provide the gateway service; and/or
one or more applications for which the user equipment device is authorised to provide the gateway service.

14. The apparatus according to claim 10, comprising:
means for send a registration request for the user equipment device, based on:
an indication from the data management entity of a maximum number of group devices allowed to receive the gateway service from the user equipment device, and/or
information from the data management entity about a subscription policy for the group devices;
wherein the registration reject message indicates a cause of determining to reject the registration request.

15. The apparatus according to claim 10, comprising:
means for determining, from the registration request message, that one of the gateway service requesting devices indicated in the registration request message previously provided a gateway service; and
means for sending a message for an access management function about the device that previously provided the gateway service;
wherein the message indicates a change in gateway for the gateway service.
